# EUROPÄISCHE PATENTANMELDUNG

(11) **EP 1 878 845 A2**
(43) Veröffentlichungstag der Anmeldung: **16.01.2008**
(21) Anmeldenummer: 07012024.1
(22) Anmeldetag: 20.06.2007
(51) Int. Cl.: E04C 3/28

(54) **Profilträger**

(30) Priorität: 04.07.2006 DE 102006031145
(71) Anmelder: Thomas GmbH + Co. Technik + Innovation KG, 27432 Bremervörde (DE)
(72) Erfinder: Jansen, Klaus, Dr., 21614 Buxtehude (DE)
(74) Vertreter: Möller, Friedrich

(57) **Zusammenfassung**

Profilträger für insbesondere hohe Lasten werden üblicherweise aus Stahl oder Aluminium hergestellt. Profilträger aus Stahl sind sehr schwer. Es werden statt dessen Profilträger aus Aluminium hergestellt, die zwar leichter, aber auch erheblich teurer sind.

Die Erfindung schlägt vor, Profilträger aus einem Verbund mehrerer Einzelprofile bzw. Einzelträger aus Kunststoff zu bilden. Solche Profilträger sind sehr leicht und wenn sie mit Verstärkungen versehen sind auch sehr stabil. Dadurch, dass der Profilträger aus Einzelprofilen gebildet wird, lassen sich aus standardgemäßen Einzelprofilen individuelle Profilträger zusammensetzen.

## Beschreibung

Die Erfindung betrifft einen Profilträger.

Für verschiedene technische Zwecke, vor allem im Maschinen-, Fahrzeug- und Anlagenbau, aber auch auf dem Bausektor, werden Profilträger eingesetzt, die hohen mechanischen Belastungen ausgesetzt sind.

Profilträger für die genannten Zwecke werden üblicherweise aus Stahl oder Aluminium hergestellt. Vor allem Stahlprofile sind sehr schwer. Die daraus hergestellten Strukturen weisen ein hohes Eigengewicht auf, was auch schon zu hohen Belastungen beiträgt. Dort, wo die aus Profilträgern hergestellten Strukturen bewegt werden müssen, beispielsweise bei Fahrzeugen und auch im Maschinenbau, sind schwere Strukturen unwirtschaftlich. Die Verwendung von Aluminium führt zwar zu im Vergleich mit Stahl leichteren Profilträgern; nachteilig an Aluminium sind aber die beschränkten mechanischen Eigenschaften und der Preis. Deswegen ist bei dem Wunsch nach leichteren Strukturen Aluminium eine mit Nachteilen behaftete Alternative.

Der Erfindung liegt die Aufgabe zugrunde, einen Profilträger zu schaffen, der leicht ist und kostengünstig herstellbar ist.

Ein Profilträger zur Lösung dieser Aufgabe weist die Merkmale des Anspruchs 1 auf. Demnach ist der Profilträger aus stranggepressten oder stranggezogenen Einzelträgern, nämlich Einzelprofilen, aus Kunststoff gebildet. Es kann sich dabei um beliebigen verstärkten oder unverstärkten Kunststoff handeln. Bevorzugt sind die Einzelprofile aus verstärktem Kunststoff gebildet. Bei den Verstärkungen handelt es sich um hochfeste lange oder kurze Kunstfasern. Dadurch, dass außerdem die Einzelprofile zur Bildung eines Verbunds ausgebildet und/oder zu einem Verbund zusammengefasst sind, lassen sich beliebige, den Anforderungen gerecht werdende Profilträger bilden. Dabei können standardmäßige Einzelprofile bzw. Einzelträger verwendet werden, und zwar sowohl gleiche als auch unterschiedliche Einzelprofile. Solchermaßen gebildete Profilträger können im Maschinen-, Anlagen- und Fahrzeugbau, aber auch auf anderen Gebieten, beispielsweise dem Bauwesen, verwendet werden.

Es ist bevorzugt vorgesehen, die Einzelprofile mit unterschiedlichen Querschnitten und/oder Verstärkungen zu versehen. Dadurch ist es möglich, aus mehreren Einzelprofilen einen Profilträger zu bilden, der auf die gestellten Anforderungen abgestimmt ist. Vor allem durch Einzelprofile mit gezielten Verstärkungen ist es möglich, die Verstärkungen dort vorzusehen, wo sie benötigt werden. Durch unterschiedliche Querschnitte der Einzelprofile kann ein Profilträger gebildet werden, der bestimmte Außenabmessungen aufweist. Es ist auch denkbar, durch Einzelprofile mit besonderen Querschnitten Möglichkeiten vorzusehen, um dem Profilträger einfach irgendwo zu befestigen oder an den Profilträger gewünschte Strukturen anzubauen.

Die Einzelprofile können aus verschiedenen Kunststoffen, und zwar verstärkte und unverstärkte, gebildet sein, die den Anforderungen entsprechen.

Bei einer besonderen Ausgestaltung des erfindungsgemäßen Profilträgers ist vorgesehen, mindestens einige, vorzugsweise alle länglichen Einzelprofile als Hohlprofile auszubilden. Dadurch wird nochmals eine Gewichtsersparung erzielt. Die Hohlräume können auch zur Unterbringung von Leitungen, aktiven Elementen oder dergleichen dienen.

Bevorzugt verfügen die als Hohlprofile ausgebildeten länglichen Einzelprofile über unterschiedliche Innenprofile. Die Außenprofile sind bevorzugt gleich, können aber auch zur Bildung von Einzelprofilen mit unterschiedlicher äußerer Gestalt voneinander abweichen. Überwiegend verfügen die Einzelprofile über unterschiedliche Innenprofile und gleiche Außenprofile. Die unterschiedlichen Innenprofile dienen dazu, die Einzelprofile mit den gewünschten, insbesondere mechanischen, Eigenschaften zu versehen. Die Innenprofile können unterschiedliche Gestalten, aber auch gleiche Gestalten mit unterschiedlichen Abmessungen, beispielsweise Durchmesser, aufweisen, so dass die Wandstärken der Einzelprofile voneinander abweichen. Die Außenprofile sind vorzugsweise gleich, um mehrere Einzelprofile zum erfindungsgemäßen Profilträger gruppieren zu können, wobei benachbarte Wandungen nebeneinanderliegender Einzelprofile zusammenliegen. Es ist auch möglich, aus den Einzelprofilen einen Profilträger zu bilden, der im Inneren mindestens einen ringsherum geschlossenen oder auch einseitig offenen Hohlraum aufweist. Dann werden die Außenabmessungen des Profilträgers ganz oder teilweise aus zusammengesetzten Einzelträgern gebildet.

Gemäß einer besonderen Weiterbildung der Erfindung ist vorgesehen, das Innenprofil mindestens einiger Einzelprofile asymmetrisch auszubilden. Dann weist das jeweilige Einzelprofil einen außermittigen Hohlraum auf, indem die Längsmittelachse des Hohlraums neben der Längsmittelachse des Einzelprofils liegt, vorzugsweise hierzu parallel verläuft. Es ist aber auch denkbar, das Innenprofil so auszubilden, dass das Einzelprofil nicht ringsherum geschlossen ist und dadurch ein einseitig offenes Einzelprofil entsteht. Beispielsweise kann dann eine Wandung des betreffenden Einzelprofils einen länglichen Schlitz aufweisen, durch den Befestigungsmittel für den aus Einzelprofilen gebildeten Profilträger in den offenen Hohlraum des jeweiligen einen Schlitz aufweisenden Einzelprofils eingreifen und hier formschlüssig verankert werden können.

Vor allem kann die Gestalt des Innenprofils von derjenigen des Außenprofils bestimmter Einzelprofile abweichen. Es kann so beim rechteckigen, quadratischen oder beispielsweise auch mehr als vier Ecken aufweisenden Außenprofil das Innenprofil rund sein oder eine andere Eckenzahl als das Außenprofil aufweisen. Möglich ist es auch, mehrere kleinere Hohlräume im Einzelprofil anzuordnen, die entweder alle oder nur teilweise geschlossen sind. Solche Hohlräume weisen entweder gleiche oder auch unterschiedliche Querschnitte auf.

Nach einer bevorzugten Ausgestaltung der Erfindung ist vorgesehen, dem Außenprofil mindestens einen Vorsprung und eine damit korrespondierende Vertiefung zuzuordnen. Beispielsweise weist bei einem viereckigen Querschnitt des Einzelprofils eine Seite einen Vorsprung und die andere eine Vertiefung auf. Genauso können bei einem solchen Profil zwei aneinander angrenzende Seiten einen vorzugsweise gleichen Vorsprung und die beiden anderen Seiten eine damit korrespondierende Vertiefung aufweisen. Möglich ist es auch, mindestens einer Außenseite des Einzelprofils mehrere Erhöhungen und Vertiefungen oder mindestens einen Vorsprung und mindestens eine Vertiefung zuzuordnen. Die Erhöhungen und Vertiefungen dienen dazu, die Einzelprofile zum erfindungsgemäßen Profilträger zentriert zusammenzusetzen. Die Erhöhungen und Vertiefungen bilden dabei eine Art formschlüssige Verzahnung benachbarter Einzelprofile quer zu ihrer Längsrichtung. Denkbar ist es aber auch, die Erhöhungen und Vertiefungen mit Hinterschneidungen zu versehen, so dass die Einzelprofile auch formschlüssig zusammengehalten werden. Dadurch kann auf separate Verbindungen der Einzelprofile verzichtet werden.

Gemäß einer weiteren Ausgestaltung der Erfindung weisen mindestens einige Einzelprofile eine gezielte Verstärkung auf. Dabei kann es sich auch um eine zusätzliche Verstärkung handeln. Diese besondere bzw. zusätzliche Verstärkung kann an hochbelasteten Stellen des Einzelprofils oder auch Profilträgers vorhanden sein. Bei der zusätzlichen Verstärkung handelt es sich bevorzugt um mindestens eine langfaserige Verstärkung aus hochzugfesten Strängen. Darüber hinaus kann das ganze Einzelprofil noch eine Verstärkung aus bevorzugt kurzen Fasern aufweisen.

Die Einzelprofile sind zum erfindungsgemäßen Profilträger mit mindestens teilweise aneinander anliegenden Außenflächen zusammengesetzt. Es werden so viele Einzelprofile bzw. Einzelträger zusammengesetzt wie erforderlich. Es entsteht so ein Profilträger mit einem Array aus Einzelträgen. Die Einzelträger bzw. Einzelprofile können mit einem beliebigen Array zusammengesetzt sein. An den aneinander angrenzenden Flächen ihrer Außenprofile sind die Einzelprofile miteinander verbunden. Dieses kann unlösbar durch Kleben, Schweißen, Siegeln oder dergleichen erfolgen, aber auch lösbar durch eine Verzahnung von Vertiefungen und Erhöhungen an mindestens Teilen der zur Bildung des gewünschten Profilträgers verwendeten Einzelprofile. Es können so für Verbindungen der Einzelprofile zum Profilträger die den Anforderungen gerecht werdenden Verbindungstechniken ausgewählt und gegebenenfalls auch kombiniert werden, indem formschlüssige Verbindungen und Klebe- oder Schweißverbindungen zusammen verwendet werden.

Gemäß einer alternativen Ausgestaltung der Erfindung ist es auch denkbar, die Einzelprofile durch separate Verbindungsmittel miteinander zu verbinden. Diese Verbindung kann sowohl lösbar als auch unlösbar sein. Die separaten Verbindungsmittel können beispielsweise als quergerichtete Körper, insbesondere Querplatten, und/oder als Abstandshalter ausgebildet sein. Durch solche Verbindungen verbleibt zwischen einigen oder gegebenenfalls auch allen Einzelprofilen ein Abstand, so dass ein Gitter- bzw. Rahmentragwerk mit besonders hoher Tragfähigkeit entsteht. Ein solches eignet sich besonders zum Kran- oder Brückenbau, aber auch für andere Einsatzzwecke.

Bei einer Weiterbildung des erfindungsgemäßen Profilträgers ist eine Dämpfung von Schwingungen vorgesehen. Dies kann zum Beispiel durch eine Kombination von Materialien bzw. Einzelträgern mit niedrigem und hohen E-Modul herbeigeführt werden, was zu einer Elimination unerwünschter bzw. kritischer Schwingungen führt.

Bevorzugt ist es vorgesehen, aktive Elemente im erfindungsgemäßen Profilträger oder mindestens einigen der zur Bildung desselben dienenden Einzelprofilen vorzusehen. Hierbei kann es sich um einzelne aktive Elemente oder auch aktive Verbundelemente handeln. Als solche kommen bevorzugt Piezofasern oder eine piezo- bzw. magnetoaktive Matrix in Betracht. Denkbar ist es aber auch, ein aktives Element aus einem Hohlelement zu bilden, das pneumatisch und/oder hydraulisch mit einem Fluid beaufschlagt wird und sich dadurch versteift, verformt und/oder zur Schwingungskompensation dient.

Bevorzugte Ausführungsbeispiele der Erfindung werden nachfolgend anhand der Zeichnung erläutert. In dieser zeigen:
- Fig. 1: einen Querschnitt durch einen Profilträger,
- Fig. 2: einen Querschnitt durch einen Profilträger gemäß einem zweiten Ausführungsbeispiel der Erfindung,
- Fig. 3: einen Querschnitt durch einen Profilträger gemäß einem dritten Ausführungsbeispiel der Erfindung, und
- Fig. 4: einen Querschnitt durch einen Profilträger gemäß einem vierten Ausführungsbeispiel der Erfindung.

Die Figuren zeigen Querschnitte durch verschiedene längliche Profilträger. Die Profilträger sind aus mehreren Einzelträger darstellenden Einzelprofilen gebildet, wobei die Einzelprofile sowohl gleich als auch unterschiedlich sein können. In der Regel ist der Querschnitt jedes Profilträgers über seine gesamte Länge der gleiche. Es ist aber auch denkbar, die Querschnitte vorzugsweise abgestuft zu ändern, indem unterschiedlich lange Einzelprofile, die praktisch Einzelträger darstellen, zum Profilträger zusammengesetzt sind.

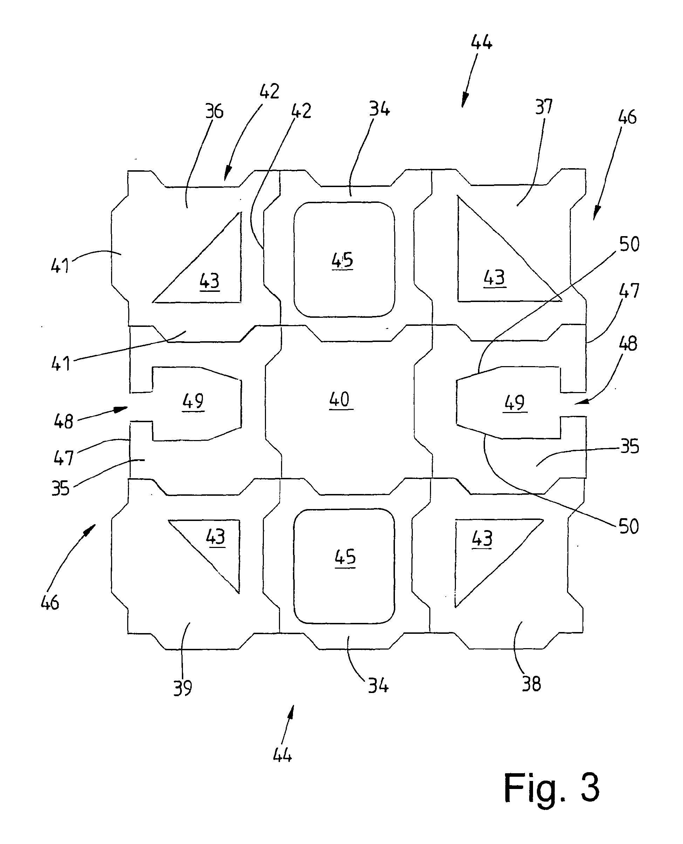

Beim Ausführungsbeispiel der Fig. 3 ist der Profilträger aus drei gleichen Einzelprofilen 10 gebildet. Die drei gleichen Einzelprofile 10 sind so zusammengesetzt, dass der Profilträger über ein gleichschenkliges Winkelprofil verfügt.

Jedes Einzelprofil 10 weist ein Außenprofil 11 und ein Innenprofil 12 auf. Dadurch verfügt das gezeigte Einzelprofil 10 über einen in Längsrichtung durchgehenden Hohlraum 13. Alternativ sind Einzelprofile denkbar, die über gar keinen Hohlraum 13 im Inneren verfügen, also vollständig massiv sind oder mehrere voneinander getrennte Hohlräume aufweisen.

Das Innenprofil 12 ist im gezeigten Ausführungsbeispiel mit einem einzelnen Querschnitt versehen, so dass der Hohlraum 13 im Einzelprofil 10 eine zylindrische Gestalt aufweist. Außen ist das Einzelprofil 10 mit einer quadratischen Grundgestalt versehen. Demzufolge ist das Außenprofil 11 aus vier Außenwänden 14, 15 und 16 gebildet. Zwei angrenzende (rechtwinklig zueinander verlaufende) Außenwände 14 sind ebenflächig ausgebildet. Die beiden übrigen Außenwände 15 und 16 hingegen sind profiliert. So verfügt die Außenwand 15 über einen Vorsprung 17 , während die Außenwand 16 mit einer zum Vorsprung 17 korrespondierenden Vertiefung 18 versehen ist. Der Vorsprung 17 wie auch die Vertiefung 18 erstrecken sich nur über einen mittleren Bereich der Außenwand 15 bzw. 16. Im Querschnitt gesehen sind der Vorsprung 17 und die Vertiefung 18 trapezförmig ausgebildet, und zwar derart, dass sie sich zur Außenwand 15 bzw. 16 hin verbreitern. Es sind beliebige andere Querschnitte für die Vorsprünge 17 und die Vertiefungen 18 denkbar. Beispielsweise können die Vorsprünge 17 und Vertiefungen 18 über einen bogenförmigen, wellenförmigen, rechteckförmigen oder dreieckförmigen Querschnitt verfügen.

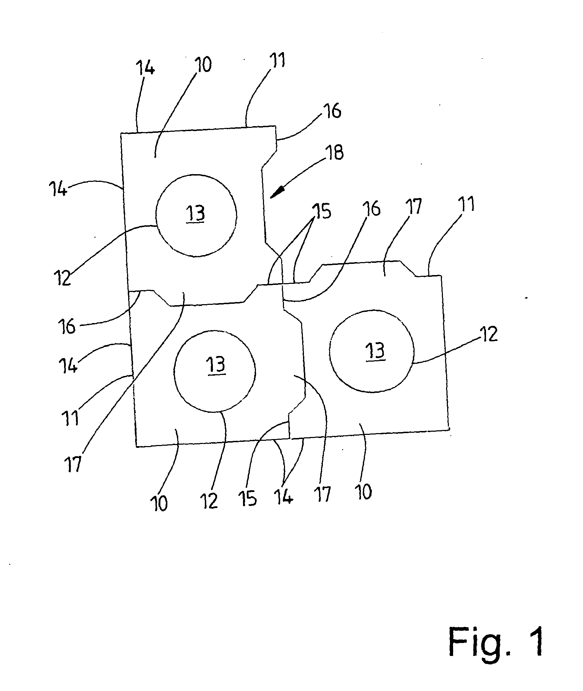

Die drei Einzelprofile 10 sind beim in der Fig. 1 gezeigten Profilträger in unterschiedlichen Relativlagen zusammengesetzt, und zwar so, dass die jeweils glatte Außenwand 14 an der Außenseite des Profilträgers liegt, indem bei übereinanderliegenden und nebeneinanderliegenden Einzelprofilen 10 die Außenwände 14 in einer gemeinsamen vertikalen oder horizontalen Ebene liegen. Des Weiteren sind die Einzelprofile 10 so zusammengesetzt, dass bei zusammenliegenden Außenwänden 15 und 16 der Vorsprung 17 in der Außenwand 15 in die Vertiefung 18 der Außenwand 16 greift. Dadurch sind die Einzelprofile 10 des gesamten Profilträgers quer zur Längsrichtung zentriert und quer zur Längsrichtung unverschieblich zusammengesetzt. Die Einzelprofile 10 können dadurch insbesondere bei Belastung des Profilträgers sich nicht quer zueinander verschieben. Um einen dauerhaften Zusammenhalt der Einzelprofile 10 des Profilträgers zu gewährleisten, sind die Einzelprofile 10 an den Außenwänden 15 und 16, an denen benachbarte Einzelprofile 11 aneinander anliegen, durch Kleben, Schweißen, Siegeln oder dergleichen miteinander verbunden. Dadurch werden die Einzelprofile 10 in Richtung der Flächennormalen der Außenwände 15 und 16 zusammengehalten, und zwar so, dass alle drei Einzelprofile 10 ein einheitliches Gebilde ergeben und auch in Längsrichtung die Einzelprofile 10 nicht gegeneinander verschiebbar sind. Bei Belastung des Profilträgers kommt es dadurch nicht zu einem Lösen der Einzelprofile 10 voneinander.

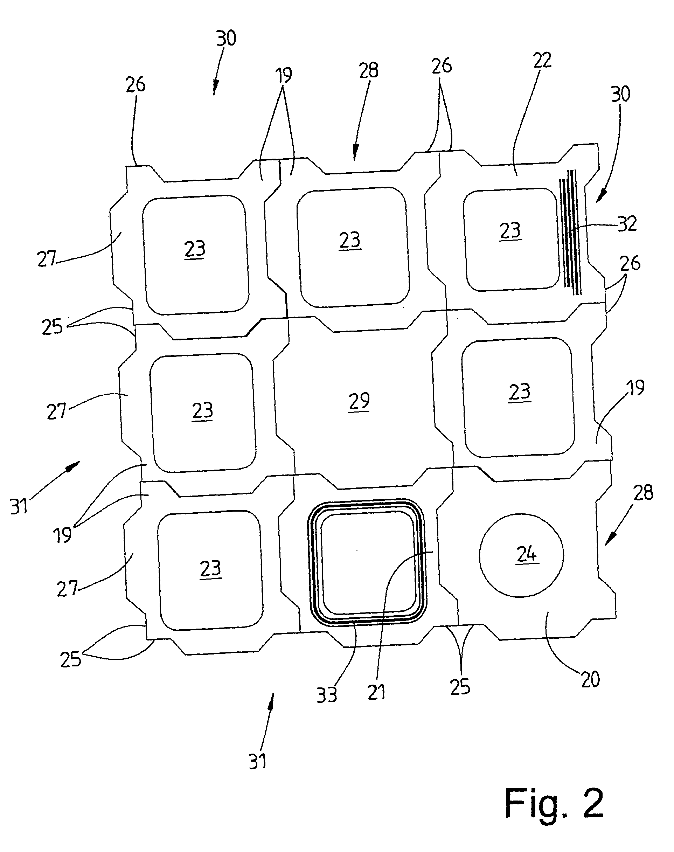

Die Fig. 2 zeigt einen Profilträger, der aus acht Einzelprofilen 19, 20, 21 und 22 zusammengesetzt ist. Dabei handelt es sich um fünf gleiche Einzelprofile 19 und jeweils ein unterschiedliches Einzelprofil 20, 21 und 22. Alle Einzelprofile 19 bis 22 verfügen im Inneren über einen in Längsrichtung durchgehenden Hohlraum 23, 24. Die Hohlräume 23 der Einzelprofile 19, 21 und 22 sind gleichermaßen mit einem viereckigen Querschnitt und abgerundeten Kanten versehen. Das Einzelprofil 20 hingegen verfügt über einen etwas kleineren Hohlraum 24 mit kreisrundem Querschnitt. Die Umrisse der Hohlräume 23 und 24 legen das Innenprofil der Einzelprofile 19 bis 22 fest. Das Außenprofil der Einzelprofile 19 bis 22 ist stets das gleiche. Im Grundquerschnitt sind die Einzelprofile 19 bis 22 quadratisch. Außenwände 25 und 26 der Einzelprofile 19 bis 22 sind einerseits mit Vorsprüngen 27 und andererseits mit dazu korrespondierenden Vertiefungen 28 versehen. Die Vorsprünge 27 und Vertiefungen 28 sind so an der Außenwand 25 und 26 der Einzelprofile 19 bis 22 angeordnet, dass zwei gleiche Vorsprünge 27 an nebeneinanderliegenden (rechtwinklig zueinander verlaufenden) Außenwänden 25 sich befinden, und zwar ebenso wie die Vertiefungen 28. Einer Außenwand 25 mit einem Vorsprung 27 liegt dann immer einer Außenwand 26 mit einer Vertiefung 28 gegenüber. Im Querschnitt sind die Vorsprünge 27 und die dazu korrespondierenden Vertiefungen 28 genauso wie die Vorsprünge 17 und Vertiefungen 18 der Einzelprofile 10 der Fig. 1 ausgebildet. Auf die Beschreibung derselben im Zusammenhang mit der Fig. 1 wird Bezug genommen.

Die insgesamt acht Einzelprofile 19 bis 22 sind beim Profilträger der Fig. 2 um einen mittigen, in Längsrichtung des Profilträgers verlaufenden Hohlraum 29 angeordnet. Da der Hohlraum 29 ringsherum von insgesamt vier Einzelprofilen 19 bzw. 21 begrenzt ist, verfügt der Hohlraum 29 über ein Querschnittsprofil, das dem Außenquerschnitt jedes Einzelprofils 19 bis 22 entspricht. Durch die Anordnung von acht Einzelprofilen 19 bis 22 um den Hohlraum 29 herum weist der Profilträger der Fig. 2 auf jeder Seite 30 bzw. 31 drei Einzelprofile 10 auf. Mit anderen Worten ist jede Seite 30 und 31 von Außenwänden 25 bzw. 26 dreier über- bzw. nebeneinander angeordneter Einzelprofile 19 bis 22 gebildet. Der in der Fig. 2 gezeigte Profilträger verfügt dadurch etwa über einen quadratischen Querschnitt, wobei der Hohlraum 29 im Inneren des Profilträgers nicht sichtbar ist, weil er vollständig von den Einzelprofilen 19 bis 22 umgeben ist.

Die Einzelprofile 19 bis 22 sind derart um ihre Längsmittelachse verdreht zusammengefügt, dass auf zwei angrenzenden Seiten 30 des Profilträgers sich über- bzw. nebeneinanderliegend nur Vertiefungen 28 befinden, während die beiden übrigen auch aneinander angrenzenden Seiten 31 nur Vorsprünge 27 aufweisen. Es ist aber auch denkbar, durch Veränderung der Relativanordnung bestimmter Einzelprofile 19, 20, 21 und/oder 22 um ihre Längsachse auf einer Seite 30 oder 31 bzw. mehrerer Seiten 30, 31 in beliebiger Reihenfolge Vertiefungen 28 auf Vorsprünge 27 folgen zu lassen und umgekehrt. Bei Bedarf kann auch der mittige Hohlraum 29 des Profilträgers der Fig. 2 ausgefüllt sein durch ein Einzelprofil 19, 20, 21 oder 22.

Das Einzelprofil 22 verfügt über eine größere Wandstärke als die Einzelprofile 19. Demzufolge ist der Hohlraum 23 im Einzelprofil 22 kleiner als der die gleiche Querschnittsgestalt aufweisende Hohlraum 23 in den Einzelprofilen 19. Durch die größere Wandstärke verfügt das Einzelprofil 22 über eine größere Festigkeit. Des Weiteren ist das Einzelprofil 22 an der Seite 30 mit einer Verstärkung 32 versehen, wobei es sich auch um eine zusätzliche Verstärkung handeln kann. Die Verstärkung 32 ist im gezeigten Ausführungsbeispiel aus mehreren Lagen einer Gewebe- oder Vliesbahn aus Kunstfasern, beispielsweise Glasoder Kohlefaser, oder auch Naturfasern gebildet. Die Lagen der Verstärkung 32 befinden sich im Bereich einer Vertiefung des Einzelprofils 22 auf der Seite 30 des Profilträgers. Die Verstärkung 32 liegt im übrigen Material zur Bildung des Einzelprofils 22 eingebettet und hiervon durchtränkt zwischen der Vertiefung 28 und dem Hohlraum 23 im Einzelprofil 22. Durch die Verstärkung 32 wird die zur Seite 30 weisende Wandung des Einzelprofils 22 zusätzlich verfestigt, um eine ausreichend stabile und dauerhaft haltbare Verankerung beispielsweise einer Schraube zum Anschrauben irgendwelcher Gegenständen an den Profilträger zu ermöglichen.

Das Einzelprofil 21 verfügt im Inneren über eine umlaufende Verstärkung 33, die ununterbrochen den Hohlraum 23 im Einzelprofil 21 umgibt. Diese gegebenenfalls mehrlagige Verstärkung 33 kann aus einer oder mehreren umlaufenden Matten eines Gewebes, Geflechts oder eines Vlieses aus hochzugfesten Fasern bestehen. Es ist aber auch denkbar, die Verstärkung 33 aus mindestens einlagig gewickelten Fasern, insbesondere hochzugfesten Kunstfasern, zu bilden. Durch die Verstärkung 33 wird das Einzelprofil 21 besonders torsionssteif gemacht.

Das Einzelprofil 20 verfügt im Vergleich zu den übrigen Einzelprofilen 19, 21 und 22 zur Bildung des Profilträgers über eine verhältnismäßig große Wandstärke. Diese kommt dadurch zustande, dass der zylindrische Hohlraum 24 im Inneren des Einzelprofils 20 über einen relativ geringen Durchmesser verfügt. Der zylindrische Holraum 24 eignet sich wie auch die anderen Hohlräume 23 und 29 zum Hindurchführen von zum Beispiel Leitungen durch den Profilträger. Der verhältnismäßig kleine Hohlraum 24 ist aber auch zur Aufnahme von Aktuatoren geeignet, um das Einzelprofil 20 und damit den gesamten Profilträger zu versteifen oder gezielt zu verformen. Es können im Hohlraum 24 aber auch aktive Elemente zur Schwingungskompensation eingesetzt werden. Bei den aktiven Elementen kann es sich um aktive Verbundelemente handeln, wie beispielsweise PiezoFasern oder eine piezo- oder magnetoaktive Matrix. Es ist auch denkbar, den Hohlraum 24, also das Innere des dann an den Enden abgedichteten Einzelprofils 20, mit einem unter Druck stehenden Fluid zu beaufschlagen, wobei Druckunterschiede des Fluids die gewünschten Eigenschaften des Einzelprofils 20 herbeiführen. Denkbar ist es auch, eine Schwingungsdämpfung der Einzelprofile 19 bis 22 herbeizuführen durch einen Verbund von Materialien unterschiedlicher Elastizitätsmodulen. Beispielsweise können Bereiche niedriger Elastizitätsmodule und Bereiche hoher Elastizitätsmodule abwechseln. Die gezielten Elastizitätsmodule führen unter anderem zu einer Filterung von Schwingungen.

Dadurch, dass beim Profilträger der Fig. 2 im Inneren der Hohlraum 29 mit dem Querschnitt eines Einzelprofils 19 bis 22 vorhanden ist, entsteht im Profilträger verhältnismäßig viel Platz. Dieser Platz kann für flexible Leitungen, aber auch starre Rohrleitungen, genutzt werden. Es können durch den Hohlraum 29 auch Schaltgestänge oder dergleichen geführt werden.

Die Einzelprofil 19 bis 22 sind beim Profilträger der Fig. 2 wie im Ausführungsbeispiel der Fig. 1 durch Kleben, Schweißen und/oder Siegeln miteinander verbunden, und zwar an den zusammenliegenden Außenwänden 25, 26 benachbarter Einzelprofile 19, 20, 21 bzw. 22. Dabei greifen die Vorsprünge 27 formschlüssig in korrespondierende Vertiefungen 28 ein, um die Einzelprofile 19 bis 22 gegen Verschieben quer zur Längsrichtung formschlüssig zu sichern. Es ist auch denkbar, die Einzelprofile 19 bis 22 des Profilträgers der Fig. 2 zusätzlich zusammenzuhalten durch um den Profilträger mindestens bereichsweise herumgewickelte Bandagen, die beispielsweise aus durchgehend hochzugfesten Kunstfasersträngen und/oder mit Kunststoff getränkte Wickel gebildet sind. Die Einzelprofile 19 bis 22 können aber auch zusätzlich zum Profilträger zusammengehalten sein durch zusammengeschraubte Bandagen aus Aluminium, Stahl oder dergleichen. Wenn die Einzelprofile 19 bis 22 von außen zum Profilträger zusammengefasst und zusammengehalten werden, kann gegebenenfalls die Verklebung benachbarter Profilträger 19 bis 22 entfallen. Auch können dann gegebenenfalls die Vorsprünge 27 und Vertiefungen weggelassen sein.

Die Fig. 3 zeigt einen Profilträger nach einem dritten Ausführungsbeispiel der Erfindung. Dieser Profilträger ist wie der Profilträger der Fig. 2 aus acht Einzelprofilen 34 bis 39 gebildet. Dadurch verfügt der Profilträger über eine etwa viereckige Gestalt. In der Mitte des Profilträgers ist wiederum ein Hohlraum 40 gebildet, dessen Gestalt der Außenabmessung der Einzelprofil 34, 36, 37, 38 bzw. 39 entspricht.

Die Außenabmessungen der Einzelprofile 34 und 36 bis 39 sind gleich. Sie verfügen über eine quadratische Grundgestalt und an zwei benachbarten Seiten über Vorsprünge 41 sowie an zwei anderen Seiten über zu den Vorsprüngen 41 korrespondierende Vertiefungen 42. Die Einzelprofile 36 bis 39 verfügen jeweils über einen Hohlraum 43 mit einem dreieckigen Querschnitt. Die Hohlräume 43 sind außermittig in den Einzelprofilen 36 bis 39 angeordnet. Eine Längsmittelachse jedes Hohlraums 43 verläuft dabei mit Abstand parallel neben der Längsmittelachse des Einzelprofils 36 bis 39. Im gezeigten Ausführungsbeispiel verfügt der Hohlraum 43 über einen Querschnitt in der Gestalt eines rechtwinkligen Dreiecks mit gleich langen Katheten. Die Hypotenuse des dreieckförmigen Hohlraums 43 liegt auf einer Diagonale des jeweiligen Einzelprofils 36 bis 39, so dass die Mitte der Hypotenuse auf der Längsmittelachse des Einzelprofils 36 bis 39 liegt. Die auf den Ecken des Profilträgers liegenden Einzelprofile 36 bis 39 sind derart orientiert, dass die den Querschnitt rechtwinkliger Dreiecke aufweisenden Hohlräume 43 zur Längsmittelachse des Profilträgers weisen. Dadurch sind die Einzelprofile 36 bis 39 im Eckbereich des Profilträgers massiv ausgebildet, was dem Profilträger eine hohe Stabilität verleiht. Die Hohlräume 43 liegen dadurch an einer von den Ecken des Profilträgers weggerichteten Seite der Diagonale durch die Einzelprofile 36 bis 39, die die Diagonale des Profilträgers rechtwinklig schneidet.

Die an den horizontalen Seiten 44 des Profilträgers zwischen den an den Ecken angeordneten Einzelprofilen 36 und 37 sowie 38 und 39 angeordneten gleichen Einzelprofile 34 sind so ausgebildet, wie die Einzelprofile 19 des Profilträgers der Fig. 2, verfügen nämlich über einen verhältnismäßig großen mittigen Hohlraum 45 mit einem viereckigen Querschnitt und abgerundeten Kanten.

In besonderer Weise sind die gleichen Einzelprofile 35 zur Bildung aufrechter Seiten 46 zwischen den an den Ecken angeordneten Einzelprofilen 36 und 39 bzw. 37 und 38 ausgebildet. Diese Einzelprofile 35 weisen nur an drei zum Inneren des Profilträgers bzw. benachbarten Einzelprofilen 36 und 39 bzw. 37 und 38 weisenden Seiten über Vorsprünge 41 und Vertiefungen 42. Die zur aufrechten Seite 46 des Profilträgers weisende Wandung 47 jedes Einzelprofils 35 ist ebenflächig (glatt) ausgebildet. In der Mitte ist die Wandung 47 offen, nämlich mit einem Schlitz 48 versehen. Der Schlitz 48 verläuft in Längsrichtung des Profilträgers. Der Schlitz 48 mündet in einem Hohlraum 49 im Inneren des Profilträgers 35. Dieser Hohlraum ist rechteckig bzw. quadratisch mit gegenüberliegenden Abschrägungen 50 an der zum inneren Hohlraum 40 des Profilträgers weisenden Seite des Hohlraums 49. Der Hohlraum 49 in den Einzelprofilen 37 kann aber auch über andere Querschnitte verfügen, beispielsweise nach Art der Hohlräume 43 und 45. Der Hohlraum 49 kann auch kreisrund sein.

Die Schlitze 48 der Einzelprofile 35 dienen dazu, an dem Profilträger etwas zu befestigen oder den Profilträger an anderen Strukturen festzuschrauben oder in sonstiger Weise zu befestigen. Dazu werden beispielsweise in Längsrichtung des Profilträgers durch den Hohlraum 49 nicht dargestellte Lochleisten geschoben, wobei in die Innengewinde aufweisenden Lochleisten quer durch den Schlitz 48 geführte (nicht gezeigte) Schrauben eingedreht werden. Es ist aber auch denkbar, in die Hohlräume der Einzelprofile 35 sogenannte Kulissensteine einzusetzen, in die Schrauben zum Befestigen des Profilträgers an anderen Strukturen oder die Befestigung irgendwelcher andere Gegenstände am Profilträger eingeschraubt werden.

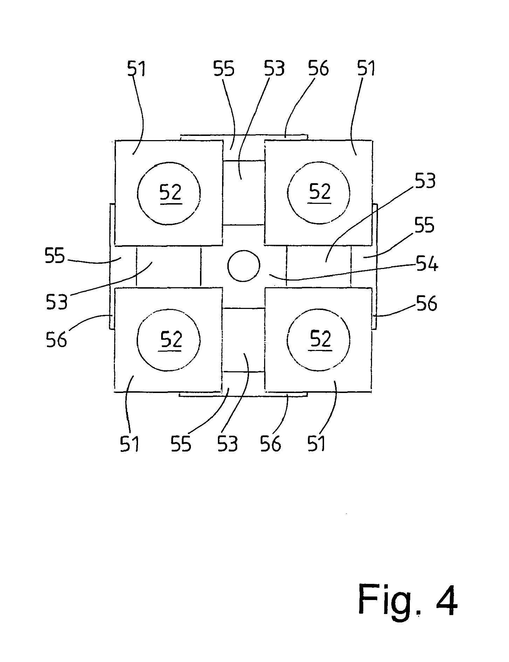

Die Fig. 4 zeigten einen Profilträger, der aus vier gleichen Einzelprofilen 51 zusammengesetzt ist. Die Einzelprofile 51 verfügen über eine sehr einfache Gestalt, nämlich einen viereckigen Außenquerschnitt mit glatten Wandungen und einen durchgehenden kreisrunden Hohlraum 52 in der Mitte des jeweiligen Einzelprofils 51.

Die vier Einzelprofile 51 sind im voneinander beabstandeten Zustand miteinander verbunden. Im gezeigten Ausführungsbeispiel weisen alle Einzelprofile 51 einen gleichen Abstand voneinander auf, so dass zwischen den Einzelprofilen 51 gleicher Breite Zwischenräume 53 entstehen. In der Mitte des Profilträgers ist ein kreuzförmiger Abstandshalter 54 angeordnet, der die Abstände der zueinander weisenden Ecken der Einzelprofile 51 festlegt. Weitere Abstandshalter 55 sind von außen in die Zwischenräume 53 eingesetzt. Diese vier gleichen Abstandshalter 55 weisen eine flache äußere Lasche 56 auf, die an den außenliegenden Seiten der Einzelprofile 51 anliegt. Die Innenseiten dieser Laschen 56 der Abstandshalter 55 sind mit den Außenseiten der Einzelprofile 51 durch Kleben, Schweißen oder dergleichen verbunden. Zusätzlich oder alternativ ist es denkbar, die übrigen Teile der Abstandshalter 54 und 55, die mit äußeren Flächen der Einzelprofile 51 in Kontakt stehen, mit den Einzelprofilen 51 durch Kleben, Schweißen oder dergleichen zu verbinden. Die Abstandshalter 54 und 55 können in Längsrichtung der Einzelprofile 51 durchlaufen, so dass sie selbst praktisch Einzelprofile bilden. Es ist aber auch denkbar, die Abstandshalter 54 und 55 verhältnismäßig kurz auszubilden und in regelmäßigen Abständen verteilt auf die Länge des Profilträgers zwischen den Einzelprofilen 51 anzuordnen. Alternativ können die Einzelprofile auch zusammenliegen, also keine Zwischenräume 53 vorhanden sein. Dann können die Einzelprofile unmittelbar an ihren zusammenliegenden Wandungen verbunden sein.

Als Material für die Einzelträger aller Ausführungsbeispiele kommt bevorzugt Kunststoff, und zwar sowohl thermoplastischer als auch duoplastischer Kunststoff, in Betracht. Dieser Kunststoff kann an sich verstärkt sein durch kurze Kunstfasern, nämlich Glasfasern, Kohlefasern oder gegebenenfalls auch Naturfasern. Zusätzlich können die Einzelprofile an besonders belasteten Stellen oder auch zur Schwingungsdämpfung mit weiteren Verstärkungen versehen sein, die vorzugsweise aus langfaserigen Gewebebahnen oder Wickel gebildet sind, aber auch aus einem Vlies bestehen können. Besonders diese zusätzlichen Verstärkungen sind aus hochzugfesten Kunstfasern gebildet, insbesondere Kohlefaser, Glasfaser oder ähnliche.

Die Einzelprofile, die die Gestalt von länglichen Einzelträgern aufweisen, werden hergestellt durch Strangpressen, wie zum Beispiel Extrudieren, oder Strangziehen, wie zum Beispiel Pultrudieren. Aber auch andere gängige strangbildende Herstellungsverfahren für die Einzelprofile bzw. Einzelträger sind denkbar.

Die vorstehenden Ausführungsbeispiele zeigen nur einige wenige von vielen Möglichkeiten zur Bildung von Profilträgern nach dem erfindungsgemäßen Prinzip der Kombination mehrerer gleicher oder unterschiedlicher Einzelprofile bzw. Einzelträger. Die Einzelträger können beliebige äußere und innere Querschnitte aufweisen. Die Erfindung ist demnach nicht auf die gezeigten inneren und äußeren Querschnitte und Profile beschränkt. Insbesondere können die Vorsprünge und Vertiefungen beliebige Gestaltungen und Querschnitte aufweisen. Beispielsweise können die Vorsprünge und Vertiefungen auch mit Hinterschneidungen versehen sein, so dass die Einzelprofile allein durch formschlüssige Verbindungen zum Profilträger zusammenfassbar sind. Die Einzelprofile können auch beliebig kombiniert werden, so dass Profilträger mit nicht nur den in den Figuren gezeigten winkelförmigen oder quadratischen Querschnitt entstehen. Gemäß der Erfindung lassen sich Profilträger beliebigen Querschnitts bilden. Der Querschnitt der Profilträger ist überwiegend von den Anforderungen an die Festigkeit aber auch den Anbau an andere Strukturen abhängig.

Die erfindungsgemäßen Profilträger eignen sich für den Fahrzeugbau, beispielsweise Längsträger, vom Fahrzeugchassis. Insbesondere werden die Profilträger dort im Fahrzeugbau auch eingesetzt, wo Gewicht einzusparen ist. Die Erfindung eignet sich auch für den Maschinenbausektor, beispielsweise Maschinenfundamente, und auch den Annlagenbau, und zwar dort beispielsweise zur Herstellung von Gerüsten und Rahmen für Anlagen technischer Einrichtungen. Im Maschinenbau können die erfindungsgemäßen Profilträger ebenfalls eingesetzt werden, beispielsweise im Kranbau. Schließlich ist es auch denkbar, die erfindungsgemäßen Profilträger auf dem Bausektor einzusetzen. Insbesondere eignen sie sich im Tiefbau, beispielsweise zum Brückenbau.

### Bezugszeichenliste:

- 10: Einzelprofil
- 11: Außenprofil
- 12: Innenprofil
- 13: Hohlraum
- 14: Außenwand
- 15: Außenwand
- 16: Außenwand
- 17: Vorsprung
- 18: Vertiefung
- 19: Einzelprofil
- 20: Einzelprofil
- 21: Einzelprofil
- 22: Einzelprofil
- 23: Hohlraum
- 24: Hohlraum
- 25: Außenwand
- 26: Außenwand
- 27: Vorsprung
- 28: Vertiefung
- 29: Hohlraum
- 30: Seite
- 31: Seite
- 32: Verstärkung
- 33: Verstärkung
- 34: Einzelprofil
- 35: Einzelprofil

- 36: Einzelprofil
- 37: Einzelprofil
- 38: Einzelprofil
- 39: Einzelprofil
- 40: Hohlraum
- 41: Vorsprung
- 42: Vertiefung
- 43: Hohlraum
- 44: Seite
- 45: Hohlraum
- 46: Seite
- 47: Wandung
- 48: Schlitz
- 49: Hohlraum
- 50: Abschrägung
- 51: Einzelprofil
- 52: Hohlraum
- 53: Zwischenraum
- 54: Abstandshalter
- 55: Abstandshalter
- 56: Lasche

## Patentansprüche

1. Profilträger mit stranggepressten oder stranggezogenen Einzelprofilen (10; 19, 20, 21, 22; 34, 35, 36, 37, 38, 39; 51) aus Kunststoff, insbesondere verstärktem Kunststoff, wobei die Einzelprofile (10; 19, 20, 21, 22; 34, 35, 36, 37, 38, 39; 51) zur Bildung eines Verbunds ausgebildet oder zu einem Verbund zusammengefasst sind.

2. Profilträger nach Anspruch 1, **gekennzeichnet durch** vorzugsweise längliche Einzelprofile (10; 19, 20, 21, 22; 34, 35, 36, 37, 38, 39; 51) mit unterschiedlichen Querschnitten und/oder Verstärkungen.

3. Profilträger nach Anspruch 1 oder 2, **dadurch gekennzeichnet, dass** die länglichen Einzelprofile (10; 19, 20, 21, 22; 34, 35, 36, 37, 38, 39; 51) als längliche Hohlprofile ausgebildet sind, wobei die als Hohlprofile ausgebildeten länglichen Einzelprofile (10; 19, 20, 21, 22; 34, 35, 36, 37, 38, 39; 51) vorzugsweise gleiche Außenprofile (11) aufweisen.

4. Profilträger nach Anspruch 3, **dadurch gekennzeichnet, dass** die Innenprofile (12) derart ausgebildet sind, dass die länglichen Einzelprofile (10; 19, 20, 21, 22; 34, 35, 36, 37, 38, 39; 51) unterschiedliche Wandstärken aufweisen, insbesondere die Innenprofile (12) unterschiedlich ausgebildet sind.

5. Profilträger nach Anspruch 3, **dadurch gekennzeichnet, dass** die Innenprofile (12) eine von den Außenprofilen (11) abweichende Gestalt aufweisen, vorzugsweise das jeweilige Innenprofil (12) asymmetrisch ist, insbesondere von der Längsmittelachse des Einzelprofils (10; 19, 20, 21, 22; 34, 35, 36, 37, 38, 39; 51) abweicht.

6. Profilträger nach einem der vorhergehenden Ansprüche, **dadurch gekennzeichnet, dass** eine Längsmittelachse des Innenprofils (12) zur Längsmittelachse des Außenprofils (11) bzw. des Einzelprofils (10; 19, 20, 21, 22; 34, 35, 36, 37, 38, 39; 51) versetzt ist, vorzugsweise parallel zur Längsmittelachse des Außenprofils (11) bzw. Einzelprofils (10; 19, 20, 21, 22; 34, 35, 36, 37, 38, 39; 51) verläuft.

7. Profilträger nach einem der vorhergehenden Ansprüche, **dadurch gekennzeichnet, dass** das Außenprofil (11) mindestens einen Vorsprung (17, 27, 41) und eine vorzugsweise damit korrespondierende Vertiefung (18, 28, 42) aufweist, vorzugsweise bei einem viereckigen Querschnitt mit vier vorzugsweise gleich langen Seiten zwei benachbarte Seite jeweils mindestens einen Vorsprung (17, 27, 41) und die beiden anderen Seiten mindestens eine dazu korrespondierende Vertiefung (18, 28, 42) aufweisen.

8. Profilträger nach einem der vorhergehenden Ansprüche, **dadurch gekennzeichnet, dass** die Vorsprünge (17, 27, 41) und die dazu korrespondierenden Vertiefungen (18, 28, 42) wenigstens einiger Einzelprofile (10; 19, 20, 21, 22; 34, 35, 36, 37, 38, 39; 51) zum formschlüssigen Ineinandergreifen der Vertiefungen (18, 28, 42) und der dazu korrespondierenden Vorsprünge (17, 27, 41) ausgebildet sind zum mindestens teilweise formschlüssigen Verbinden mehrerer Einzelprofile (10; 19, 20, 21, 22; 34, 35, 36, 37, 38, 39; 51).

9. Profilträger nach einem der vorhergehenden Ansprüche, **dadurch gekennzeichnet, dass** mindestens ein Einzelprofil (35) einen Schlitz (48), vorzugsweise einen Längsschlitz, aufweist, der das Außenprofil (11) mit dem Innenprofil (12) verbindet.

10. Profilträger nach einem der vorhergehenden Ansprüche, **dadurch gekennzeichnet, dass** mindestens einige Einzelprofile (10; 19, 20, 21, 22; 34, 35, 36, 37, 38, 39; 51) eine Verstärkung (32, 33), vorzugsweise eine zusätzliche Verstärkung (32, 33), aufweisen.

11. Profilträger nach einem der vorhergehenden Ansprüche, **dadurch gekennzeichnet, dass** mehrere Einzelprofile (10; 19, 20, 21, 22; 34, 35, 36, 37, 38, 39; 51) mindestens teilweise aneinanderliegend zusammengesetzt sind und/oder die Einzelprofile (10; 19, 20, 21, 22; 34, 35, 36, 37, 38, 39; 51) an ihren aneinanderliegenden Außenwänden (25, 26, 47) der Außenprofile (11) mindestens teilweise durch Kleben, Schweißen, Siegeln oder dergleichen verbunden sind.

12. Profilträger nach einem der vorhergehenden Ansprüche, **dadurch gekennzeichnet, dass** die Einzelprofile (10; 19, 20, 21, 22; 34, 35, 36, 37, 38, 39; 51) so zusammengesetzt sind, dass sie einen Hohlraum (29; 40) bilden, vorzugsweise einen ringsherum geschlossenen Hohlraum (29, 40).

13. Profilträger nach einem der vorhergehenden Ansprüche, **dadurch gekennzeichnet, dass** die Einzelprofile (10; 19, 20, 21, 22; 34, 35, 36, 37, 38, 39; 51) durch separate Verbindungsmittel miteinander verbunden sind, wobei vorzugsweise die Verbindungsmittel mindestens zum Teil Abstandshalter der benachbarten Einzelprofile (10; 19, 20, 21, 22; 34, 35, 36, 37, 38, 39; 51) aufweisen.

14. Profilträger nach einem der vorhergehenden Ansprüche, **gekennzeichnet durch** mindestens ein aktives Element, das ausgewählten Einzelprofilen (10; 19, 20, 21, 22; 34, 35, 36, 37, 38, 39; 51) oder einer Gruppe von Einzelprofilen (10; 19, 20, 21, 22; 34, 35, 36, 37, 38, 39; 51) zugeordnet ist und vorzugsweise das aktive Element aus Piezofasern oder einer piezo- bzw. magnetoaktiven Matrix gebildet ist.

15. Profilträger nach Anspruch 14, **dadurch gekennzeichnet, dass** das aktive Element durch geschlossene Hohlräume vorzugsweise in mindestens einigen Einzelprofilen (10; 19, 20, 21, 22; 34, 35, 36, 37, 38, 39; 51) gebildet ist, die mit einem unter Druck stehenden Fluid beaufschlagbar sind.
